# EUROPEAN PATENT APPLICATION

(11) **EP 4 258 079 A1**
(43) Date of publication of application: **11.10.2023**
(21) Application number: 21900146.8
(22) Date of filing: 23.11.2021
(51) Int. Cl.: G05D 1/10, G05D 1/00, G08G 5/00, B64C 39/02

(54) **METHOD AND SYSTEM FOR CONTROLLING AN UNMANNED AERIAL VEHICLE**

(30) Priority: 06.12.2020 ES 202031222
(71) Applicant: Arborea Intellbird S.L., 37185 Villamayor (Salamanca) (ES)
(72) Inventor: BERNABEU GONZALEZ, Carlos José, 37185 VILLAMAYOR (ES)
(86) International application number: PCT/ES2021/070843
(87) International publication number: WO 2022/117900

(57) **Abstract**

Method and system for controlling an unmanned vehicle (1), which allow the vehicle to operate with full autonomy without the involvement of a human pilot by means of automatic remote guiding from a control station (2). The vehicle transmits data (6) captured by its peripheral devices to the control station (2), which processes the data (6) together with information (8) received from external entities (9) and generates response actions orders (10) for the vehicle (1) to avoid obstacles (7) or perform operational tasks, the control station (2) also generating data (11) and information (13) destined for external entities (12, 14), all communications being carried out in real time using a low-latency communication protocol.

## Description

### Technical field

The invention belongs to the domain of unmanned vehicles and its subject matter is a method and a system to control those vehicles in an automatic mode, that is, without human involvement.

### Background art

Unmanned vehicles can be advantageously utilized in tasks such as surveillance of installations or infrastructure inspection, unmanned airplanes being the most used vehicles for these purposes. The airplane can be guided by way of a remote control by a single human pilot having the airplane within visual line of sight (known as VLOS flight, Visual Line of Sight). When the airplane performs a flight beyond the pilot's visual line of sight (BVLOS flight, Beyond Visual Line of Sight), it can be guided by way of orders received from a human pilot from a remote location or it can operate in automatic mode according to a route which has been recorded in its control computing device (microcontroller).

In the last-mentioned example, the airplane's microcontroller will process the data captured by the different sensors and other on-board flight devices without need of a human involvement. Patent document PCT/ES2018/070607 (ARBOREA INTELLBIRD, S.L.), 26/03/2020, "Unmanned aircraft operating control system and method" describes at [0044] an embodiment applicable to an unmanned vehicle, specifically an airplane or a UAV swarm, which comprises the programming of an automatic flight and the establishment of safety protocols for performing the flight.

An unmanned airplane operating on automatic flight mode will encounter all sorts of unforeseen obstacles, which could not have been taken into consideration when programming the flight. For this reason, the vehicle must possess detect and avoid capabilities, to detect and avoid obstacles autonomously. Likewise, if the vehicle is to be utilized for autonomous surveillance or inspection tasks it must possess detect and act capabilities, that is, to detect the points or elements at which an action must be performed (for instance, image acquisition). This will require to equip the vehicle with complex electronic components, which poses serious inconveniences, chiefly its high cost, its added weight and the subsequent high energy consumption, which reduces the vehicle's autonomy.

Patent application ES202030822 (ARBOREA INTELLBIRD, S.L.), filed 31/07/2020, "System and method for infrastructure inspection" is aimed at solving said problems by carrying out infrastructure control operations through an autonomous vehicle automatically following a preconfigured route, the route having been designed by means of waypoints which have been previously calculated from a georeferenced point cloud which is equivalent to a three-dimensional plan of the infrastructure. This patent application is applicable to inspections carried out in environments where moving elements or structural changes on the elements under inspection cannot be expected, for instance, to linear infrastructures such as power lines. The aircraft will not require to have high processing capabilities on-board to detect and avoid, because the elements under control have been previously associated to waypoints. All this entails weight and consumption savings and therefore a higher autonomy.

However, when the tasks must be performed in environments with moving or changing elements, for instance, to the surveillance of a harbor where there are moving cranes, or the inspection of windmills, the inconveniences caused by the need to equip the vehicle with "detect and avoid" and "detect and act" processing capabilities will still be present.

The present invention allows an unmanned vehicle to move and carry out operative tasks in changing environments in an autonomous way, that is, without the involvement of a human pilot, the vehicle being remotely guided in a completely automated fashion from a control station and with a reduced on- board equipment, thus lowering the vehicle's cost and increasing its operational autonomy.

### Summary of the invention

In a first aspect, the subject matter of the invention is a method for controlling an unmanned vehicle (1), the method being implemented under control of a computing system configured with executable instructions located in a control station (2) and without the involvement of a human pilot. The unmanned vehicle (1) moves autonomously, meaning that it is not guided by any human pilot, either by an on-site pilot or by a pilot in a remote location, but is piloted instead by the control station (2).

The method comprises a first step of transmitting to at least one unmanned vehicle (1) an order to move. A second step comprises transmitting to said vehicle (1) successive orders to move. A third step comprises receiving in the control station (2), in real time, the data (6) captured by the at least one unmanned vehicle (1) and information (8) issued by external entities (9). "External entities" means public or private entities other than the vehicle (1) operator and the control station (2) operator and whose competences relate to the performance of the vehicle's (1) movements, for instance, air traffic controllers, weather services, territorial defense and surveillance forces or infrastructure owners.

A fourth stage comprises processing in real time at the control station (2) the data (6) and information (8) received from the at least one unmanned vehicle (1) and from the external entities (9), a processing task which results in the generation of response action orders (10) which in a subsequent step are transmitted in real time to the at least one unmanned vehicle (1).

Thus, guiding the vehicle (1) plus all other tasks associated to the movement of the vehicle (1) are performed at the control station (2) which is configured to effectively guide the vehicle (1) without human involvement. Both-way communication between the control station (2) and the vehicle (1) is performed in real time through a low-latency communications protocol.

In a second aspect, the subject matter of the invention is a system for controlling an unmanned vehicle (1). The system comprises, firstly, a control station (2) which comprises a processing device which executes a computer program. The control station (2) is in a remote location with respect to the vehicle (1). Secondly, the system comprises an unmanned vehicle (1), any type being suitable, for instance, an aircraft (UAV, Unmanned Aerial Vehicle, commonly known as drones), a terrestrial vehicle (UGV, Unmanned Ground Vehicle), a surface aquatic vehicle (USV, Unmanned Surface Vehicle) or underwater vehicle (UUV, Unmanned Underwater Vehicle). In a preferred embodiment, the invention is applied to a UAV.

Generally speaking, unmanned vehicles capable of functioning autonomously, and particularly those used in surveillance or inspections tasks, require control computer units with a high processing capacity, because the programmed route is stored in the on-board control computer unit itself, which receives inputs from the vehicle's peripheral devices, processes them and generates instructions accordingly, both to guide the vehicle to avoid the obstacles (detect and avoid) and to perform the programmed tasks (detect and act, for instance, take photographs at preestablished points). These operations, and particularly the effective detection of the elements on which the tasks are to be performed, minimizing false positives and negatives, imply a high processing capacity requiring complex electronic components. This means that a high cost is concentrated in a single vehicle which is liable to accidents, and causes a high energy consumption, which affects the vehicle's (1) operational autonomy.

On the contrary, in the invention at hand, the unmanned vehicle (1) will not require on board processing capacity to detect and avoid or to detect and act, because these operations are performed by the control station (2). To shift the processing away from the unmanned vehicle (1) to a control station (2) allows to overcome the above-mentioned disadvantages, because the vehicle (1) carries on board less components and less complex, meaning less weight and cost, improved autonomy and risk reduction. Besides, the processing capacity which can be reached by the devices and computer programs integrated in the control station (2) are much higher than when the equipment is on board an unmanned vehicle.

### Brief description of drawings

As a complement to the description, a drawing represents, for illustration and non-limitative purposes, the following:

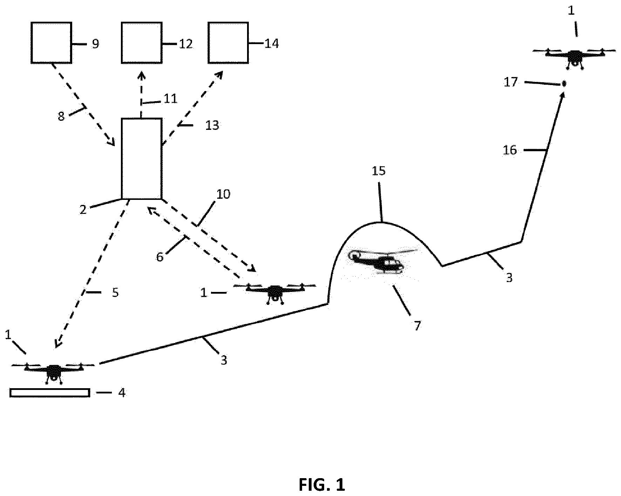

Figure 1.- A scheme of the performance of the method for controlling an unmanned vehicle, in a preferred embodiment where the vehicle is an aircraft.

### Description of embodiments

In a first aspect, the subject matter of the invention is a method for controlling an unmanned vehicle (1), implemented under the control of a computing device configured with executable instructions and located in a control station (2) remotely located with respect to the vehicle (1), whereby the control that the control station (2) exerts on the unmanned vehicle (1) is remote and the method is performed without the involvement of a human pilot.

In a preferred embodiment that will be herein described, the unmanned vehicle (1) is an unmanned aircraft (UAV).

The aircraft (1) moves by executing successive orders issued by the control station (2). These orders are equivalent to those that a human pilot would convey to a UAV through a remote control.

Once the airplane (1) is located in a starting point (4), the method comprises, in a first step, transmitting from the control station (2) to the airplane (1) the order (5) to move. This order (5) implies that the flight will commence according to a certain course, at a certain height and speed; and said order (5) will be followed by successive orders to move, said orders being the result of processing both the data (6) transmitted in a regular flow from the airplane (1) to the control station (2) and the information (8) received by the control station (2).

This initial communication between the control station (2) and the aircraft (1), as well as any communication in both ways during the implementation of the method, are performed in real time by way of a low-latency communications protocol. In an embodiment, the communications are performed by a 5G communications protocol.

While the airplane (1) is moving, the control station (2) can receive two types of inputs: on the one hand, the data (6) which the airplane (1) is continuously acquiring (1) through its devices. Said data (6) are of two types: related to the space-time location of the aircraft (1) (such as position, height, course, speed and inertial coordinates) and related to the environment within the range of the aircraft's peripheral devices, for instance, the presence of an obstacle (7). All these data (6) are transmitted in raw, in regular flow and real time to the control station (2). On the other hand, the control station (2) receives inputs (8) consisting of information issued by external entities (9). This information (8) can be weather reports, notice of programmed aerial safety events, known as NOTAM (Notice to Airmen); or information about unforeseen aerial safety events, for instance, transmitted by a control tower or by air traffic digital management systems.

Above-mentioned data (6) and information (8) received by the control station (2) may relate to any circumstances relevant to the vehicle's movement. They can be divided into two main types: those posing a hazard to the flight of the aircraft (1) like the presence of obstacles (7), such as an element of an infrastructure, another aircraft on a collision course; or an unforeseen weather event, or a breakdown or damage suffered by the airplane (1). A second type of circumstances refers to the presence of certain elements (for instance, critical elements in an infrastructure under inspection) in respect of which one or more operative tasks should be performed.

The control station (2) processes the data (6) and information in real time and generates response actions orders (10). In the face of the first type of above-mentioned circumstances, the response action orders (10) will be directed at avoiding the hazard and they may consist, for instance, in diverting the aircraft from its course, to avoid the obstacle (7) or to get away from the area affected by the unforeseen weather event, or in making an emergency landing. Regarding the second type of circumstances, the response action orders (10) are directed at the execution of an operative task according to the detected element, for instance, taking a picture, record a video or keep in stationary flight waiting for further response action orders (10).

In a subsequent method step, the generated response action orders (10) are transmitted in real time to the aircraft (1).

Additionally, the control station (2) can issue and transmit data (11) and information (13) directed at external entities (12, 14). The data (11) will concern the safety of the aircraft's move, for instance, position data and position vectors, which will be sent to external entities (12) related to vehicle traffic management, such as a control tower or an air traffic digital management systems. The information (13) will preferably consist of alerts generated from the data (6) acquired by the aircraft (1), which will be sent to external entities (14), which in this case may be public authorities competent for the management of said information (13), for instance, forest surveillance authorities that are sent an alert about a wildfire which has been detected; or infrastructure owners on which an inspection is being carried out, which are alerted about an issue requiring urgent attention.

An example of an unmanned aircraft's (1) move is hereinafter described, specifically a forest surveillance flight for wildfires prevention, said flight being indicated in the drawing under references (3) y (15).

The aircraft is located in a base (4), which is the starting point and which is located in the proximity of the area encompassed by the flight. At a pre-established time, the control station (2) transmits to the UAV's (1) microcontroller the order (5) to move. The aircraft (1) takes off and begins flying following successive movement orders which are transmitted by the control station (2). Through its peripheral devices in connection with its microcontroller, the aircraft (1) transmits to the control station (2), in regular flow and real time, the data (6) relative to its space-time location and to the environment, among them, image sequences in visible and infrared spectrums. At a given time, a visible spectrum image sequence detects an obstacle in the shape of a helicopter (7) which is advancing on a collision course with the airplane (1). The control station (2), which is receiving those images in real time, processes them by way of an artificial vision software known in the art, whereby the helicopter (7) is detected, identified and positioned. In real time, the control station (2) generates and transmits to the UAV's (1) microcontroller a response action order (10) consisting in a course (15) to be followed by the aircraft (1) to avoid the obstacle (7). This change of position and the new position vectors of the aircraft (1) are sent (11) to the competent air traffic control system (12).

Afterwards, the infrared spectrum images (6) which the aircraft (1) is sending in regular flow to the control station (2) and which are being processed by the artificial vision software, detect a hot spot. The position metadata and the inertial measurements linked to those images allow the control station (2) to photogrammetrically position the hot spot. The control station (2) generates and transmits to the UAV's (1) microcontroller a response action order (10) whereby a course (16) must be followed so that the aircraft (1) is positioned in a point (17) located in the proximity of the hot spot. The images and metadata (6) acquired by the aircraft (1) from this point (17) and transmitted in real time to the control station (2) are processed and if it is determined that they are within a range of alert parameters programmed in the software, the control station (2) generates an alert (13), which is sent to an external entity (14), specifically to the authority in charge of forest surveillance.

In a second aspect, the subject matter of the present invention is a system for controlling an unmanned vehicle (1), which is configured to carry out the steps of the described method.

The system comprises a control station (2) which comprises the following components: a computing system, comprising at least a circuit integrating multicore processors, a motherboard, RAM memory units, storage means, a graphics card configured to process a large volume of information in the form of images, power supply unit, refrigeration means and a network and low-latency communications card, for instance a system based on router communication provided with a SIM card. The expert in the field, according to foreseeable needs, will be able to configure the control station (2) with equipments of one or another capacity selected among those known in the art.

Said computing system houses a software suite containing an operating system and a program configured to execute the steps of the described method, comprising processing the data and information (13) received from the unmanned vehicle (1) by way of detection algorithms, generating response action orders (10) and sending data and position vectors (11) and alerts (13) to respective external entities (12, 14).

The system also comprises an unmanned vehicle (1). In a preferred embodiment, said vehicle is an unmanned aircraft, preferably incorporating several propulsion arms (multirotor UAV), known in the art; notwithstanding the fact that the invention may be implemented with any type of unmanned vehicle.

The UAV (1) comprises a central body with several propulsion arms emerging from it. The central body houses a processing device, comprising a standard microcontroller integrating a communications device which may be a radio receptor or a router provided with a SIM card to allow low latency communications. The microcontroller is connected to a variety of peripheral devices: on the one hand, sensors permitting to locate the aircraft (1) in space and time, known in the art: gyroscope, accelerometer, barometer, magnetometer; a satellite positioning system capable of connecting to several satellite networks, such as GPS, GLONASS, BeiDou or GALILEO and a high precision positioning system, for instance a RTK (Real-Time Kinematics)-type system. On the other hand, peripheral devices to detect obstacles (7) or elements in respect of which response actions must be performed. Said devices may be selected by the expert in the field according to the type of move that the aircraft (1) is to make and the environment in which it is performed. They may be, among others, video or photo cameras, infrared thermal imaging camera, LIDAR sensors or sweeping-type sensors like that on board the aircraft referred in patent document EP3392652 A1 (ARBOREA INTELLBIRD SL), 24/10/2018, Method for inspecting materials and aerial vehicle to implement said method, [0023].

## Claims

1. A method for controlling an unmanned vehicle (1), **characterized in that** it comprises, under control of a computing system configured with executable instructions located in a control station (2) and without the involvement of a human pilot, the following steps:
a) Transmitting to at least one unmanned vehicle (1) an order to move.
b) Transmitting to the at least one unmanned vehicle (1) successive orders to move.
c) Receiving in real time at the control station (2) the data (6) acquired by the at least one unmanned vehicle (1) and information (8) issued by external entities (9).
d) Processing in real time at the control station (2) the received data (6) and information (8) and generate response actions orders (10).
e) Transmitting in real time to the at least one unmanned vehicle (1) the response actions orders (10).

2. The method for controlling an unmanned vehicle (1) according to claim 1 **characterized in that** it comprises the additional step of transmitting data (11) or information (13) from the control station (2) to external entities (12, 14).

3. A system for controlling an unmanned vehicle (1) **characterized in that** it comprises a control station (2) and at least an unmanned vehicle (1) configured to execute the steps of the method of claims 1 and 2.

4. The system for controlling an unmanned vehicle (1) according to claim 3, **characterized in that** the control station (2) comprises a processing device which executes a computer program.

5. The system for controlling an unmanned vehicle (1) according to claim 3, **characterized in that** the unmanned vehicle (1) comprises a processing device and peripheral devices, the processing device being configured to send in real time to the control station (2) the data (6) received from the peripheral devices and to receive in real time from the control station (2), and to execute, response actions orders (10).

6. A software suite containing an operative system and a computer program which comprises instructions to cause the control station (2) of claim 3 to execute the method steps of claims 1 and 2.

7. A computer-readable medium storing the computer program of claim 6.
